# EUROPEAN PATENT SPECIFICATION

(11) **EP 2 805 837 B1**
(45) Date of publication and mention of the grant of the patent: **18.07.2018**
(21) Application number: 14167680.9
(22) Date of filing: 09.05.2014
(51) Int. Cl.: B60C 15/06, B60C 13/04, B60C 13/00

(54) **Vehicle tire**
Fahrzeugreifen
Pneu de véhicule

(30) Priority: 22.05.2013 FI 20135548
(43) Date of publication of application: 26.11.2014
(73) Proprietor: Nokian Renkaat Oyj, 37101 Nokia (FI)
(72) Inventor: Myllymaa, Harri, 33710 Tampere (FI)
(74) Representative: Berggren Oy, Tampere

(56) References cited:
- EP-A1- 0 551 997
- EP-A1- 1 454 765
- EP-A2- 1 201 414
- JP-A- H06 211 007
- US-A1- 2007 044 882
- US-A1- 2011 034 619

## Description

The invention relates to a vehicle tire, comprising
- a tread intended for rolling contact against a surface, said tread having been formed with a tread pattern comprising circumferential grooves and transverse grooves for removing water from a contact patch between the surface and the tire,
- a tire carcass comprising at least one body cord and a belt structure,
- a bead area comprising a bead wire, a clinch, and an apex,
- a sidewall comprising an outermost sidewall layer, a sideways rising portion of the clinch, a body cord, and an innerliner.

In vehicle operation, the tire is subjected to a variety of stresses, which should not cause tire damage. One such stress type is a stab or slash applied to the side of a tire, which may result for example from the vehicle colliding with a curb or from a loose object on the surface hitting the side of a tire. The side of a tire may also be an object of vandalism. It is the objective to make a tire as capable as possible of withstanding these damage mechanisms, as well as to save the tire from permanent damage.

The stiffness and composition of a tire's sidewall have a major effect on the tire's handling characteristics. From the standpoint of steerability there is needed a sufficiently stiff composition, yet on the other hand the excessively stiff composition results in the transmission of small surface irregularities to the vehicle and thereby impairs passenger comfort. On the other hand, again, a tire which is pleasant from the standpoint of passenger comfort may impair steerability and cause "sluggishness", which is perceived as sideways shimmying or the lack of directional stability in driving. Regarding these mutually conflicting aspects, an appropriate comprise should be found.

From the prior art is known US2006/0060284A1, which discloses, as one embodiment, a tire structure wherein the sidewall's inner layer, inside the outermost layer, comprises, as reinforcement, carbon black and aramid short fibers oriented co-directionally relative to each other and circumferentially relative to the tire. The sidewall's inner layer contains 100 phr of rubber, 55-80 phr of a reinforcing filler, including about 1-12 phr of aramid filament.

From the prior art the preamble of claim 1 is known from JP H06 211007, which provides a pneumatic tire that can be made lightweight without the degradation of external flaw resistance and cracking resistance that are the original required characteristics of a side wall part. A side wall part is formed of two inner-outer rubber layers. The inner layer 2i is formed of foam rubber with closed cells and the outer layer is formed of unfoaming rubber with short fiber compounded therein. A plurality of different short fibers and compositions are disclosed in this document.

It is an objective of the invention to provide a vehicle tire, wherein the slash and stab resistance of sidewalls have been improved and, on the other hand, the tire rolling resistance can be maintained at a low level.

The tire according to the invention is characterized by what is presented in the characterizing part of claim 1.

The vehicle tire according to the invention comprises
- a tread intended for rolling contact against a surface, said tread having been formed with a tread pattern comprising circumferential grooves and transverse grooves for removing water from a contact patch between the surface and the tire,
- a tire carcass comprising at least one body cord and a belt structure,
- a bead area comprising a bead wire, a clinch, and an apex,
- a sidewall comprising an outermost sidewall layer, a sideways rising portion of the clinch, a body cord, and an innerliner,
- and a tread wing,
- the outermost sidewall layer being constructed from a rubber compound which contains 0,2-0,5% by weight of aramid fiber having a fiber length of 1-5 mm, wherein the tread wing is manufactured from a material other than the outermost sidewall layer.

The disclosed solution fulfills the objective and provides a slash and stab resistance improved with respect to the standard tire. Likewise, the hysteresis of the tire is slightly reduced, thus reducing also the rolling resistance. On the other hand, the solution does not significantly change other properties of the tire.

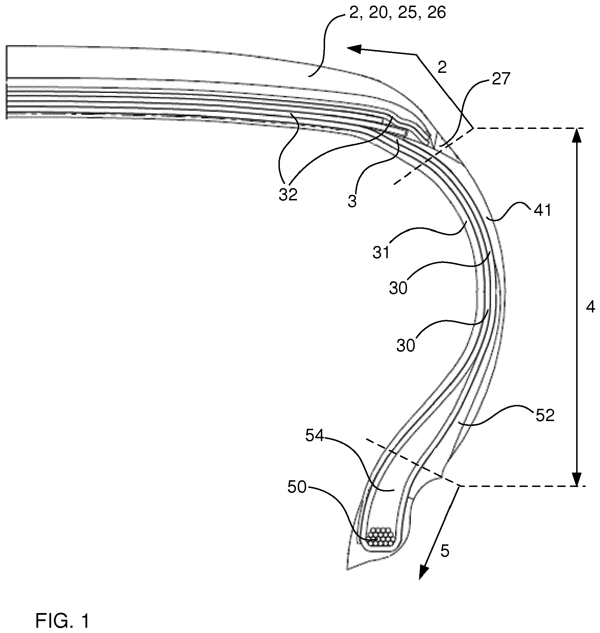

The invention will now be described in more detail with reference to the accompanying figure 1.

Fig. 1 shows in cross-section a crosswise divided vehicle tire half, i.e. the figure only shows one sidewall and a half of the tread. Shown in the figure is a vehicle tire 1, which comprises
- a tread 2 intended for rolling contact against a surface, said tread 2 having been formed with a tread pattern 20 comprising circumferential grooves 25 and transverse grooves 26 for removing water from a contact patch between the surface and the tire 1 (for the sake clarity, these circumferential and transverse grooves making up the tread pattern are not shown in the figure),
- a tire carcass 3 comprising at least one body cord 30 and a belt structure 32,
- a bead area 5 comprising a bead wire 50, a clinch 52, and an apex 54,
- a sidewall 4 comprising an outermost sidewall layer 41, a sideways rising portion of the clinch 52, a body cord 30, and an innerliner 31,
- the outermost sidewall layer 41 being constructed from a rubber compound which contains 0,2-0,5% by weight of aramid fiber having a fiber length of 1-5 mm.

By means of arrows, fig. 1 roughly indicates zones that can be considered including in the bead area 5, the sidewall 4, and the tread 2. The arrowed zones are not absolutely exact and in various tire compositions the locations may vary slightly. As for the carcass 3, the figure only points to a single component, yet the carcass covers nearly the entire cross-sectional area of the tire.

According to one preferred embodiment, the aramid fibers have a length of 3 ± 1 mm, preferably 3 ± 0,5 mm. Further, according to one preferred embodiment, the aramid fiber is 5-30 µm in diameter. Having individual strands of the aramid fiber within the range defined by these dimensions has produced particularly good results in tire research efforts.

In the embodiment shown in fig. 1, said outermost sidewall layer 41 of the vehicle tire is a layer next outward from the body cord 30. In such a solution, a possible slash or stab hitting the side of a tire is first encountered by a layer that has been improved in terms of its slash and stab protection properties by means an aramid fiber. This particular layer is not very susceptible to damage and the tire appearance remains unchanged. Neither is there a commencement of tire damage that would possibly progress gradually from the initial damage. The outermost sidewall layer 41 of the aforementioned type also protects the body cord ply 30 from damage, thus preventing the occurrence of a similar gradually progressing damage mechanism upon a carcass cord wire breakup.

According to one embodiment, the outermost sidewall layer 41 of a vehicle tire is also adapted to protect the bead area 5. In this embodiment, the outermost sidewall layer 41 is "stretched", as compared to what is shown in fig. 1, further towards the bead area 5, even all the way down to a toe (not shown in the figure). This enables the tire to be protected from a slash or stab strike directed particularly at the edge of a tire and a rim. Furthermore, in another direction, i.e. in the tread direction, the arrangement can be such that the outermost sidewall layer 41 extends to underneath the tread 2 in such a way that said outermost sidewall layer 41 and the belt structure 32 are in a partial overlap. Hence, the protection is applied also in the shoulder area of a tire.

According to an example not according to the invention a tread wing could also be manufactured from the same material as the outermost sidewall layer. According to the invention the tread wing is manufactured from a material other than the outermost sidewall layer. This calls for attention to other viewpoints which must be considered and which are perhaps more significant than the achievable slash or stab resistance capability.

According to a preferred embodiment, the outermost sidewall layer in conventional car tires has a thickness of 1,5-5 mm, yet in such a way that, as the layer is formulated for a wedge-like shape, the layer's thickness is within the range of 0-10 mm. Especially in fringe areas of the sidewall, i.e.in the vicinity of a tire's shoulder area and in the vicinity of its bead area, the tire's structural components are wedge-shaped in cross-section and have a changing thickness, whereby such wedge-shaped components can be fabricated to become integral with the outermost sidewall layer.

According to the invention, the vehicle tire has its outermost sidewall layer constructed from a rubber compound with a carbon black content of 10-40% by weight. Carbon black at this point has a positive effect on tire hysteresis, thus reducing the rolling resistance. Likewise, carbon black promotes strong bonding of aramid fibers to the surrounding material for an increased tearing strength of the composition. The most obvious manufacturing method for fabricating the outermost sidewall layer comprises an extrusion process, wherein the raw material is passed through a die for manufacturing a tire component or an intermediate part. Said aramid fiber is oriented in extrusion to extend substantially in the plane direction of the tire side, yet has in said plane direction a random fiber orientation for providing an appropriately mesh type structure. Thus, there are obtained, in the sidewall's plane direction, more or less equally strong properties in all directions, responding appropriately to what is needed.

As obvious for a person skilled in the art, the invention and its embodiments are not limited to the foregoing exemplary embodiments. Terminology included in the claims, expressing the existence of characterizing features, for example "the tire comprises a tread", are open in such a way that the presentation of characterizing features does not rule out the existence of such other characterizing features which have not been presented in the independent or dependent claims.

### Reference numerals shown in the figure:

- 1: tire
- 2: tread
- 20: tread pattern
- 22: tread block
- 25: circumferential groove
- 26: transverse groove
- 27: tread wing
- 3: carcass
- 30: body cord
- 32: belt structure
- 4: sidewall
- 41: outermost sidewall layer
- 5: bead area
- 50: bead wire
- 52: clinch
- 54: apex

## Claims

1. A vehicle tire (1), comprising
- a tread (2) intended for rolling contact against a surface, said tread (2) having been formed with a tread pattern (20) comprising circumferential grooves (25) and transverse grooves (26) for removing water from a contact patch between the surface and the tire (1),
- a tire carcass (3) comprising at least one body cord (30) and a belt structure (32),
- a bead area (5) comprising a bead wire (50), a clinch (52), and an apex (54),
- a sidewall (4) comprising an outermost sidewall layer (41), a sideways rising portion of the clinch (52), a body cord (30), and an innerliner (31),
- and a tread wing (27) **characterized in that**
- the outermost sidewall layer (41) is constructed from a rubber compound
• with a carbon black content of 10-40% by weight,
• which contains 0,2-0,5% by weight of aramid fiber having a fiber length of 1-5 mm, wherein
- the tread wing (27) is manufactured from a material other than the outermost sidewall layer (41).

2. A vehicle tire (1) according to claim 1, **characterized in that** said outermost sidewall layer (41) of the vehicle tire (1) is a layer next outward from the body cord (30).

3. A vehicle tire (1) according to claim 1, **characterized in that** the aramid fibers have a length of 3 ± 1 mm, preferably 3 ± 0,5 mm.

4. A vehicle tire (1) according to claim 1, **characterized in that** the outermost sidewall layer (41) is also adapted to protect the bead area (5).

5. A vehicle tire (1) according to claim 1, **characterized in that** the outermost sidewall layer (41) extends to underneath the tread (2) in such a way that said outermost sidewall layer (41) and the belt structure (32) are in a partial overlap.

6. A vehicle tire (1) according to claim 1, **characterized in that** the outermost sidewall layer (41) has a thickness of 1,5-5 mm, yet in such a way that, as the layer is formulated for a wedge-like shape, the layer's thickness is within the range of 0-10 mm.

7. A vehicle tire (1) according to claim 1, **characterized in that** said aramid fiber is oriented to extend in the plane direction of the tire side (4), yet has in said plane direction a random fiber orientation.

8. A vehicle tire (1) according to claim 1, **characterized in that** said aramid fiber is 5-30 µm in diameter.

## Patentansprüche

1. Ein Fahrzeugreifen (1), der Folgendes aufweist:
- eine Lauffläche (2) für den Rollkontakt auf einer Oberfläche, wobei die Lauffläche (2) mit einem Laufflächenmuster (20) mit Umfangsnuten (25) und Quernuten (26) zum Entfernen von Wasser von einem Kontaktbereich zwischen der Oberfläche und dem Reifen (1) gebildet ist,
- eine Reifenkarkasse (3) mit mindestens einer Cordeinlage (30) und einer Gürtelstruktur (32),
- einen Wulstbereich (5) mit einem Wulstdraht (50), einem Wulstschutz (52) und einem Kernreiter (54),
- eine Seitenwand (4) mit einer äußersten Seitenwandschicht (41), einem seitwärts ansteigenden Abschnitt des Wulstschutzes (52), einer Cordeinlage (30) und einer Innenschicht (31),
- und einen Laufflächenauslauf (27),
**dadurch gekennzeichnet, dass**
- die äußerste Seitenwandschicht (41) aus einem Gummiverbundstoff hergestellt ist,
• mit einem Rußgehalt von 10 - 40 Gew.-%,
• der 0,2 - 0,5 Gew.-% Aramidfaser mit einer Faserlänge von 1 - 5 mm enthält, wobei
- der Laufflächenauslauf (27) aus einem anderen Material als die äußerste Seitenwandschicht (41) hergestellt ist.

2. Fahrzeugreifen (1) gemäß Anspruch 1, **dadurch gekennzeichnet, dass** die äußerste Seitenwandschicht (41) des Fahrzeugreifens (1) eine Schicht ist, die als nächste Schicht außerhalb der Cordeinlage (30) folgt.

3. Fahrzeugreifen (1) gemäß Anspruch 1, **dadurch gekennzeichnet, dass** die Aramidfasern eine Länge von 3 ± 1 mm, vorzugsweise 3 ± 0,5 mm haben.

4. Fahrzeugreifen (1) gemäß Anspruch 1, **dadurch gekennzeichnet, dass** die äußerste Seitenwandschicht (41) auch ausgestaltet ist, um den Wulstbereich (5) zu schützen.

5. Fahrzeugreifen (1) gemäß Anspruch 1, **dadurch gekennzeichnet, dass** die äußerste Seitenwandschicht (41) bis nach unterhalb der Lauffläche (2) so verläuft, dass die äußerste Seitenwandschicht (41) und die Gürtelstruktur (32) einander teilweise überlappen.

6. Fahrzeugreifen (1) gemäß Anspruch 1, **dadurch gekennzeichnet, dass** die äußerste Seitenwandschicht (41) eine Dicke von 1,5 - 5 mm hat, jedoch so, dass sich, wenn die Schicht als keilförmige Form gestaltet ist, die Dicke der Schicht in einem Bereich von 0 - 10 mm befindet.

7. Fahrzeugreifen (1) gemäß Anspruch 1, **dadurch gekennzeichnet, dass** die Aramidfaser ausgerichtet ist, um in der Ebenenrichtung der Reifenseite (4) zu verlaufen, jedoch in der Ebenenrichtung eine zufällige Faserausrichtung aufweist.

8. Fahrzeugreifen (1) gemäß Anspruch 1, **dadurch gekennzeichnet, dass** die Aramidfaser einen Durchmesser von 5 - 30 µm aufweist.

## Revendications

1. Pneu de véhicule (1), comprenant:
- une bande de roulement (2) destinée à une mise en contact par roulement avec une surface, ladite bande de roulement (2) étant réalisée avec une sculpture de bande de roulement (20) comprenant des rainures circonférentielles (25) et des rainures transversales (26) pour éliminer l'eau d'une zone de contact entre la surface et le pneu (1);
- une carcasse de pneu (3) comprenant au moins un câblé (30) et une structure de ceintures (32);
- une zone (5) faisant office de talon comprenant une tringle de talon (50), un bourrelet (52) et un bourrage sur tringle (54);
- un flanc (4) comprenant une couche de flanc la plus externe (41), une portion du bourrelet (52) s'élevant en direction latérale, un câblé (30), et un calandrage intérieur (31),
- ainsi qu'une aile de bande de roulement (27);
**caractérisé en ce que**
- la couche de flanc la plus externe (41) est réalisée à partir d'un composé de caoutchouc
• possédant une teneur en noir de carbone de 10 à 40 % en poids;
• qui contient de 0,2 à 0,5 % en poids de fibre d'aramide possédant une longueur de fibre 1 à 5 mm; dans lequel
- l'aile de bande de roulement (27) est réalisée à partir d'une matière autre que celle de la couche de flanc la plus externe (41).

2. Pneu de véhicule (1) selon la revendication 1, **caractérisé en ce que** ladite couche de flanc la plus externe (41) du pneu de véhicule (1) est une couche située à côté du câblé (30) à l'extérieur de celui-ci.

3. Pneu de véhicule (1) selon la revendication 1, **caractérisé en ce que** les fibres d'aramide possèdent une longueur de 3 ± 1 mm, de préférence de 3 ± 0,5 mm.

4. Pneu de véhicule (1) selon la revendication 1, **caractérisé en ce que** la couche de flanc la plus externe (41) est également conçue pour protéger la zone (5) faisant office de talon.

5. Pneu de véhicule (1) selon la revendication 1, **caractérisé en ce que** la couche de flanc la plus externe (41) s'étend jusqu'en dessous de la bande de roulement (2) d'une manière telle que ladite couche de flanc la plus externe (41) et la structure de ceintures (32) se chevauchent en partie.

6. Pneu de véhicule (1) selon la revendication 1, **caractérisé en ce que** la couche de flanc la plus externe (41) possède une épaisseur de 1,5 à 5 mm, toutefois d'une manière telle que, étant donné que la couche est formulée pour une configuration cunéiforme, l'épaisseur de la couche se situe dans la plage de 0 à 10 mm.

7. Pneu de véhicule (1) selon la revendication 1, **caractérisé en ce que** ladite fibre en aramide est orientée de façon à s'étendre dans la direction dans le plan du côté (4) du pneu, mais possède une orientation de fibre aléatoire dans ladite direction dans ledit plan.

8. Pneu de véhicule (1) selon la revendication 1, **caractérisé en ce que** ladite fibre en aramide possède un diamètre de 5 à 30 µm.
